Europäisches Patentamt

European Patent Office

Office européen des brevets

(11) Publication number: **0 562 486 A1**

# EUROPEAN PATENT APPLICATION

(21) Application number: 93104540.5

(22) Date of filing: 19.03.93

(51) Int. Cl.⁵: **B32B 27/20**, B32B 27/36, C08J 5/18

(30) Priority: 23.03.92 JP 64807/92

(43) Date of publication of application:
29.09.93 Bulletin 93/39

(84) Designated Contracting States:
DE FR GB IT LU NL

(71) Applicant: DIAFOIL HOECHST CO., LTD
28-10, Hongo 1-chome
Bunkyo-ku Tokyo(JP)

(72) Inventor: Sato, Yoshinori
2570-1-404 Shimotsuruma
Yamato-shi, Kanagawa-ken(JP)

Inventor: Masuda, Narihiro
2-6-3, Tachibanadai, Midori-ku
Yokohama-shi, Kanagawa-ken(JP)
Inventor: Inagaki, Masashi
919-6, Nagatake, Tsukui-machi
Tsukui-gun, Kanagawa-ken(JP)
Inventor: Koizumi, Masumi
2-16-6-201, Hatsuyama, Miyamae-ku
Kawasaki-shi, Kanagawa-ken(JP)

(74) Representative: TER MEER - MÜLLER - STEINMEISTER & PARTNER
Mauerkircherstrasse 45
D-81679 München (DE)

(54) **Laminated polyester film.**

(57) A laminated polyester film having a layer (layer B) consisting a polyester containing particles having an average particle size of 0.5 $\mu$m or smaller in an amount of 0.5 % by weight or less based on the weight of polyester in the layer B, and at least one layer (layer A) which is formed on at least one surface of the layer B and consists of a polyester containing vaterite calcium carbonate particles having an average particle-size of 0.07 to 1.0 $\mu$m and a particle size distribution value $d_{25}/d_{75}$ of 1.60 or smaller, where $d_{25}$ and $d_{75}$ represent particle sizes ($\mu$m) corresponding to 25 % and 75 %, respectively of the whole volume when an integrated volume of the particles is measured from the largest particles, in an amount of 0.2 to 20 % by weight based on the weight of the polyester in the layer A, wherein a thickness of the layer A is from 0.1 to 5 $\mu$m and 0.5 to 20 times an average particle size of vaterite calcium carbonate, which laminated film is suitable as a base film of a magnetic recording medium.

Figure

The present invention relates to a laminated polyester film. More particularly, the present invention relates to a laminated polyester film having a number of uniform protrusions, which film is excellent in runnability and abrasion resistance and suitable as a base film of a magnetic recording medium for high density recording.

In these years, a recording density of a magnetic recording medium has been remarkably increased, and will be increased further. As one of measures for achieving high density recording, there is proposed a metal-powder type magnetic recording medium in which a magnetic layer is formed by coating a mixture of a magnetic metal and a binder on a base film. With such high density recording type magnetic recording medium, a thickness of magnetic layer should be decreased as the recording density is increased. Therefore, surface characteristics of the base film should be improved.

As in the case of conventional magnetic tapes, a polyester film is expected to be a suitable base film of the metal-powder type magnetic recording medium. But, many problems should be solved before using the polyester film as the base film of high density recording type magnetic recording medium.

First, since the thickness of magnetic layer is decreased, surface smoothness of the magnetic layer is more influenced by roughness of the base film than ever. Therefore, the surface of base film should be made as smooth as possible.

On the other hand, it is necessary to form roughness on the film surface and provide the film with a slip property so as to improve runnability in the polyester film production and a winding property during winding up the film, or to achieve good runnability when a magnetic tape comprising the polyester base film is contacted to a guide pin or a VTR head.

As described above, to achieve both of the high density recording and high quality of the magnetic tape, it is required for the polyester film to satisfy two antinomic properties, that is, improvement of the surface smoothness of the film on one hand and maintaining good runnability on the other hand. To satisfy such requirement, many improvements have been made on polyester films having the same properties on both surfaces. However, for the development of a magnetic recording medium for an 8 mm video equipment, or other high quality grade magnetic recording media, the film having the same properties on both surface cannot comply with the requirement, and a film having different properties on two surfaces is required and developed. That is, a smooth surface is formed on one surface of the base film on which the magnetic layer is formed to improve the magnetic recording properties, while roughness is imparted to the other surface of the base film or the other surface is coated and stretched to form protrusions in a wave form or a wrinkle form to the surface so as to improve the runnability. As one of typical examples of such films, there is known a co-extruded laminated film comprising, on one surface, a layer comprising particles which impart roughness to the surface and, on the other surface, a layer containing few particles.

However, the co-extruded laminated film having the different properties on two surfaces suffers from a problem that, when the film on which a magnetic layer is formed is wound and aged, the roughness of the surface on which no magnetic layer is formed is transferred to the magnetic layer surface so that the smoothness of the magnetic layer is deteriorated, whereby electromagnetic conversion characteristics are decreased. In particular, when a degree of roughness on the surface having no magnetic layer is large, the electromagnetic conversion characteristics are greatly decreased, and the magnetic recording medium cannot be used for high density recording.

To solve such problem, Japanese Patent Kokai Publication No. 86916/1991 discloses an improvement in which a size of each protrusion on the surface having no magnetic layer is made small to prevent the deterioration of electromagnetic conversion even when the roughness is transferred to the magnetic layer, while the number of protrusions is increased to improve the runnability of the film. However, this method which adds a large number of minute particles has some problems to maintain good runnability of the film and high quality of the magnetic tape. That is, to form uniform minute protrusions, the layer containing minute particles should be made very thin, and to increase the number of protrusions, an amount of particles should be increased. But, when a large amount of particles are included in a very thin layer, the particles tend to agglomerate to form large protrusions or the particles easily drop off.

Hitherto, as the particles to be included in the film, there are used particles which are inert to the polyester film such as kaolin, silicon oxide, titanium dioxide, calcium phosphate and the like. With such particles, the runnability is improved. However, since such particles have a wide particle size distribution, coarse protrusions are often formed, with which the electromagnetic conversion is deteriorated. Accordingly, such film cannot be used as a base film of a high density recording magnetic recording medium.

To solve the above problem, it is proposed to use organic or inorganic particles having a narrow particle size distribution. For example, Japanese Patent Kokai Publication Nos. 207356/1987 and 217755/1984 disclose monodisperse silicon oxide and crosslinked polymer particles prepared by emulsion polymerization, respectively. When the silicon oxide particles are used, they are hard and tend to damage the film or easily drop from the film. When the crosslinked polymer particles are used, they are easily deformed by orientation of the film or have insufficient heat resistance.

Accordingly, no polyester film having high electromagnetic conversion characteristics, excellent runnability and abrasion resistance as a base film of the high density recording magnetic recording medium has been produced.

An object of the present invention is to provide a polyester film which is suitable as a base film of a high density recording magnetic recording medium.

According to the present invention, there is provided a laminated polyester film comprising a layer (layer B) consisting a polyester containing particles having an average particle size of 0.5 $\mu$m or smaller in an amount of 0.5 % by weight or less based on the weight of polyester in the layer B, and at least one layer (layer A) which is formed on at least one surface of the layer B and consists of a polyester containing vaterite calcium carbonate particles having an average particle size of 0.07 to 1.0 $\mu$m and a particle size distribution value of 1.60 or smaller defined by the following equation:

Particle Size Distribution value $= d_{25}/d_{75}$

where $d_{25}$ and $d_{75}$ represent particle sizes ($\mu$m) corresponding to 25 % and 75 %, respectively of the whole volume when an integrated volume of the particles is measured from the largest particles, in an amount of 0.2 to 20 % by weight based on the weight of the polyester in the layer A, wherein a thickness of the layer A is from 0.1 to 5 $\mu$m and 0.5 to 20 times an average particle size of vaterite calcium carbonate.

Figure shows a schematic view of an apparatus used for evaluating the abrasion resistance of the film in Examples.

The polyester to be used in the present invention is a polyester prepared by polycondensation of an aromatic dicarboxylic acid or its ester such as terephthalic acid and 2,6-naphthalene dicarboxylic acid and an aliphatic glycol such as ethylene glycol, diethylene glycol and 1,4-cyclohexanedimethanol. Typical examples of the polyester are polyethylene terephthalate (PET), polyethylene 2,6-naphthalene dicarboxylate (PEN), and the like. The polyester may be a homopolymer or a copolymer comprising 20 % or less of a third monomer. As the optional dicarboxylic acid, isophthalic acid, phthalic acid, adipic acid, sebacic acid, oxycarboxylic acids (e.g. p-oxyethoxybenzoic acid, etc.) and mixtures thereof may be used. As the optional glycol, propylene glycol, butanediol, neopentyl glycol and mixtures thereof may be used.

In general, the polyester to be used in the present invention has an intrinsic viscosity of 0.5 to 1.0. The polyesters of the layers A and B may be the same or different. To prevent enlargement of thickness spots or curling of the biaxially oriented film due to the difference of intrinsic viscosity between the layers, the difference of intrinsic viscosity between the layers A and B is preferably 0.20 or less, more preferably 0.15 or less, in particular 0.10 or less.

It is possible to blend other polymer (e.g. polyamide, polyolefin, polycarbonate, etc.) with the polyester. But, it is not preferable to blend a polymer which alters the crystallinity of polyester or blending of which greatly changes the surface shape.

The layers A and B can be made of different polymers. For example, PET and PEN may be combined, or one or both of the layers A and B are made of different copolymers.

The polyester may contain any additive such as a heat stabilizer, a blocking preventing agent, an antioxidant, a colorant, an antistatic agent, a UV light absorber, etc. in addition to a transesterification catalyst and a polymerization catalyst which are used in the preparation of the polyester.

One of the characteristics of the present invention is that the layer A contains specific vaterite calcium carbonate particles. As calcium carbonate, in addition to natural calcium carbonate which is ground and sieved, there is known precipitated calcium carbonate which is prepared by reacting carbon dioxide-containing gas with a liquid containing calcium hydroxide. By the precipitation method, calcite calcium carbonate particles having uniform particle size are produced. The addition of the calcite calcium carbonate particles to the polyester film is known from Japanese Patent Publication No. 16856/1989. But, the calcite calcium carbonate particles do not satisfy the particle size distribution value required by the present invention.

The present invention uses the vaterite calcium carbonate particles having a very narrow particle size distribution, which are produced by the above precipitation method with suitably selecting the reaction conditions including a hydrogen ion concentration and a reaction rate.

One kind of the vaterite calcium carbonate is "VAN" manufactured by Maruo Calcium Co., Ltd. While the vaterite calcium carbonate can be used as such, it is preferable to surface treat the particles so as to decrease solubility and increase dispersibility in the reaction system of the polyester production. As a surface treating agent which acts also as a dispersant, a compound disclosed in Japanese Patent kokai Publication Nos. 69426/1984 and 256558/1989, in particular a polymeric polycarboxylic acid or its sodium or ammonium salt is preferably used. The surface treating agent is effectively added in course of production of the particles.

The vaterite calcium carbonate is obtained in the form of sphere or ellipsoid. A ratio of a longer axis to a shorter axis is usually about 1.8 or less. In the present invention, the particle size distribution value is 1.60 or less. When it exceeds 1.60, uniformity of the height and distribution of the protrusions formed on the layer A is decreased and large protrusions tend to form, with which the electromagnetic conversion characteristics are deteriorated unpreferably.

The particle size distribution value is preferably 1.50 or less, more preferably 1.40 or less. When the polyester film is used as a base film of the metal-powder type magnetic recording medium, the high uniformity of protrusions is required. Therefore, the particle size distribution value of 1.40 or less is particularly preferred.

An average particle size of the above particles to be used in the present invention is from 0.07 to 1.0 $\mu$m, preferably from 0.1 to 0.8 $\mu$m, more preferably from 0.1 to 0.5 $\mu$m, in particular from 0.1 to 0.3 $\mu$m. When the average particle size is less than 0.07 $\mu$m, improvement of the runnability or abrasion resistance is insufficient. When it exceeds 1.0 $\mu$m, the large protrusions are formed so that the electromagnetic conversion characteristics are deteriorated.

A content of the above particles is from 0.2 to 20 % by weight, preferably from 0.2 to 10 % by weight, more preferably from 0.3 to 8 % by weight, in particular from 1 to 3 % by weight based on the weight of the polyester in the layer A.

When the content of particles is less than 0.2 % by weight, improvement of the runnability or abrasion resistance is insufficient. When it exceeds 20 % by weight, the particles tend to agglomerate and form coarse protrusions, with which the electromagnetic conversion characteristics are deteriorated or the particles tend to drop off.

A thickness of the layer A of the laminated polyester film according to the present invention is from 0.1 to 5.0 $\mu$m, preferably from 0.5 to 4.0 $\mu$m, more preferably from 1.0 to 3.0 $\mu$m. When the thickness of layer A is smaller than 0.1 $\mu$m, the particles tend to drop off and dropped particles cause some problems in the film production step or the magnetic tape production step. When this thickness exceeds 5 $\mu$m, the produced film has insufficient slittability.

In addition, the thickness of layer A is 0.5 to 20 times, preferably 1 to 20 times, more preferably 3 to 20 time the average particle size of vaterite calcium carbonate particles contained in the layer A. When this ratio is less than 0.5 time, the particles tend to drop off. When it exceeds 20 times, the uniformity of protrusions is decreased so that the runnability or abrasion resistance is insufficient.

In the present invention, the film having a number of uniform protrusions is obtained by the addition of the above vaterite calcium carbonate particles to the layer A. A center line average surface roughness (Ra) of the layer A is usually from 0.005 to 0.040 $\mu$m, preferably from 0.010 to 0.030 $\mu$m. The largest height of the protrusion (Rt) is from 0.05 to 0.3 $\mu$m. In addition, a ratio of Rt/Ra is preferably 10 or less, more preferably 9 or less, that is, the height of protrusions is uniform and the coarse protrusion is not present. If these conditions are satisfied, the polyester film achieves the high requirements for the electromagnetic conversion characteristics when the film is used as the base film of magnetic tape.

On the other hand, the layer B has a surface as smooth as possible to prevent the decrease of electromagnetic conversion characteristics. Then, the layer B may not contain any particle. For the improvement of runnability of the film in the production step or prevention of flaws of the film surface in the orientation step, a small amount of particles can be added to the layer B. In this case, to prevent the deterioration of electromagnetic conversion characteristics, an average particle size of particles to be added to the layer B is 0.5 $\mu$m or less, preferably from 0.005 to 0.5 $\mu$m, more preferably from 0.01 to 0.3 $\mu$m. A content of the particles in the layer B is 0.5 % or smaller, preferably 0.3 % by weight or smaller, more preferably 0.2 % by weight or smaller. When the average particle size exceeds 0.5 $\mu$m or the particle content exceeds 0.5 % by weight, the electromagnetic conversion characteristics are deteriorated so that the object of the present invention is not achieved.

Examples of the particles to be added to the layer B are kaolin, talc, titanium dioxide, silicon dioxide, calcium phosphate, aluminum oxide, zeolite, lithium fluoride, calcium fluoride, barium sulfate, carbon black and fine particles of a heat resistant polymer which is disclosed in Japanese Patent Publication No. 5216/1984). In addition to these particles, the above vaterite calcium carbonate particles or natural or synthetic calcite calcium carbonate particles can be used.

Further, as the particles to be contained in the layer B, so-called precipitated particles can be used. The precipitated particles mean fine particles which precipitate in a usual polymerization of polyester using a compound of an alkali metal or alkaline earth metal as a transesterification catalyst. Alternatively, the precipitated particles may be formed by the addition of terephthalic acid in the transesterification or polycondensation reaction. In these cases, it is possible to use at least one phosphorus compound such as phosphoric acid, trimethyl phosphate, triethyl phosphate, tributyl phosphate, acid ethyl phosphate, phosphorous acid, trimethyl phosphite, triethyl phosphite, tributyl phosphite, and the like.

When the esterification process is employed, inactive material particles can be precipitated by the above procedure. For example, the compound of alkali metal or alkaline earth metal is added to the reaction system before or after the completion of esterification reaction and the polymerization is carried out in the presence of phosphoric acid.

In any case, the precipitated fine particles formed in the course of polyester production contains at least one element such as calcium, lithium, antimony and phosphorus.

To further improve scratch resistance of the film, the layer A or both the layers A and B contain aluminum oxide particles. The aluminum oxide particles to be used are delta or gamma-aluminum oxide particles, preferably the delta-aluminum oxide particles, which has an average particle size of 0.5 $\mu$m or less, preferably 0.1 $\mu$m or less. The aluminum oxide particles may be prepared by pyrolysis, namely flame hydrolysis of anhydrous aluminum chloride or an ammonium alum-pyrolysis method, namely a method comprising reacting aluminum hydroxide with sulfuric acid to form aluminum sulfate and reacting aluminum sulfate with ammonium sulfate to obtain ammonium alum followed by calcination of ammonium alum.

A primary particle size of aluminum oxide prepared by the above method is usually in a range between 5 to 40 nm. Since the aluminum oxide particles often form agglomerates of 0.5 $\mu$ or larger, they are preferably comminuted before use. In this case, some of the particles may form more or less aggregated secondary particles, and an apparent average particle size is 0.5 $\mu$m or less, preferably 0.1 $\mu$m or less.

The laminated polyester film of the present invention comprises the layer A and the layer B, and a ratio of the thickness of layer A to that of the layer B (A/B) is preferably from 1/99 to 50/50.

When a Young's modulus of the laminated film is at least 450 kg/mm$^2$ in a transverse direction of the film, and a sum of Young's moduli in the machine and transverse directions of the film is at least 850 kg/mm$^2$, preferably at least 900 kg/mm$^2$, the runnability of the magnetic tape and head touch of the magnetic tape to the VTR head are excellent so that the high-level electromagnetic conversion characteristics are achieved. In the case of metal-coating type magnetic recording medium with which high grade characteristics are required, the sum of Young's moduli in the machine and transverse directions of the film is at least 900 kg/mm$^2$.

The production of the laminated polyester film of the present invention will be explained in detail.

First, the compounding of vaterite calcium carbonate particles in the polyester is explained. The particles are dispersed in ethylene glycol to obtain a slurry, and the slurry is added to the polycondensation system for the preparation of the polyester at any stage, or the particles are dispersed in ethylene glycol or water to obtain a slurry and the slurry is blended with the polyester in a vented extruder, or the dried particles are blended with the polyester resin in the extruder.

When a small amount of particles is added to the polyester of layer B, the above method can be applied. In view of simplicity of the production process, preferably the slurry of particles is added in the production step of polyester.

The laminated polyester film of the present invention can be produced by a lamination method or a coextrusion method. The coextrusion method is preferred. For example, using two or three extruder or a two or three-layer manifold or feed block, the polyester raw materials are laminated and a molten sheet is extruded from a two or three-layer orifice, cooled and solidified on a cooling drum to obtain an unoriented sheet. In this case, to improve the flatness of sheet, adhesion between the sheet and the cooling drum should be high. To this end, the present invention preferably uses electrostatic pinning or liquid coating adhesion.

In the electrostatic pinning, a linear electrode is stretched over the sheet in a direction perpendicular to a flow direction of the sheet, and a direct current of about 5 to 10 kV is applied to the electrode to charge static electricity on the sheet, whereby the adhesion of the sheet to the drum in increased. In the liquid coating adhesion, the whole or a part (e.g. parts contacting to the both edges of sheet) of the peripheral surface of rotating cooling drum is coated with a liquid uniformly, whereby the adhesion of the drum to the sheet is increased. These two methods may be used in combination in the present invention, if desired.

The film is biaxially stretched. Concretely, the unoriented sheet is stretched in one direction with a roll or a tenter at a temperature of 70 to 120°C, preferably 80 to 110°C at a draw ratio of 3.0 to 7, preferably 3.5 to 6. In the next step, the uniaxially oriented film is stretched in a direction perpendicular to the direction of first orientation at a temperature of 70 to 125°C, preferably 80 to 115°C at a draw ratio of 3.0 to 7, preferably 3.5 to 6, and heat treated at a temperature of 170 to 250°C at a constant length or with a limited relaxiation or elongation of 30 % or less to obtain a biaxially oriented film.

The orientation in one direction can be carried out in two or more steps. In this case, the final draw ratio is preferably in the above range.

Alternatively, the sheet can be biaxially stretched at the same time with an area ratio of 10 to 40 times. If necessary, before or after heat treatment, the oriented film may be reoriented in a machine and/or transverse directions.

The polyester film of the present invention is suitably used as a base film of a high graded magnetic recording medium having better electromagnetic conversion characteristics than the conventional ones or a metal coating type magnetic recording medium having a magnetic layer comprising metal powder. Also, the polyester film of the present invention may be used as a base film of a vapor deposition type magnetic recording medium having a ferromagnetic metal thin layer.

The present invention will be illustrated by the following Examples, which do not limit the scope of the present invention. In Examples, "parts" and "%" are by weight.

In Examples, the properties and characteristics are measured or evaluated as follows:

(1) Average particle size and particle size distribution value

The particle size is measured using an electron microphotograph and converted to an equivalent sphere diameter.

The particle size distribution value is obtained by measuring the particle sizes of about 1000 particles, and a volume is integrated from the largest particle size to the smallest particle size. Narrowness of the particle size distribution is expressed by a ratio of $d_{25}/d_{75}$ wherein $d_{25}$ is a particle size of particle which is at the 25 % volume based on the total volume of the particles and $d_{75}$ is a particle size of particle which is at the 75 % volume based on the total volume of the particles. As this value approaches 1 (one), the particle size distribution is narrow.

The average particle size is expressed by $d_{50}$ ($\mu$m).

(2) Thickness of a layer A

The thickness of layer A is measured by observing a cross section of the film with a transmission electron ultra-microscope. That is, a small piece of film sample is embedded in a hardened resin composition comprising an epoxy resin, a hardener and an accelerator, and cut out with a microtome to obtain an observation sample having a thickness of about 200 nm. A microphotograph of the sample is taken using a transmission electron microscope (H-900 manufactured by Hitachi Limited) and a thickness of layer A containing the particles is measured. The acceleration voltage of the electron microscope is 300 kV, and a magnification is adjusted at 10,000 to 100,000 according to the thickness of layer A.

The thickness of layer A is measured at 50 points and 10 thicknesses from the largest one and 10 thicknesses from the smallest one are neglected and the 30 thicknesses are averaged.

(3) Surface roughness of a film

Center line average roughness (Ra):

Using a surface roughness tester (SE-3F manufactured by Kosaka Kenkyusho, Ltd.), the center line average roughness Ra is measured according to JIS B-0601-1976, with necessary modification. The measuring conditions include the use of a contact needle having a tip radius of 2 $\mu$m, 30 mg of probe contact pressure, 0.08 mm of cutoff, and 2.5 mm of a measuring length. The measurement is performed at 10 points on the film and the measured values are averaged.

Largest protrusion height Rt:

From a cross sectional curve obtained with the above surface roughness tester (SE-3F), a part along 2.5 mm of a base line is selected (selected part), and sandwiched with a pair of parallel lines. A distance between the parallel lines is measured in the vertical direction of the selected part and expressed in a unit of "$\mu$m", which is used as the largest height of the removed part. The measuring conditions include the use of a contact needle having a tip radius of 2 $\mu$m, 30 mg of probe contact pressure and 0.08 mm of cutoff. The measurement is performed with ten selected parts and the measured values are averaged. As the Rt/Ra ratio is smaller, the protrusions are uniform.

(4) Abrasion resistance

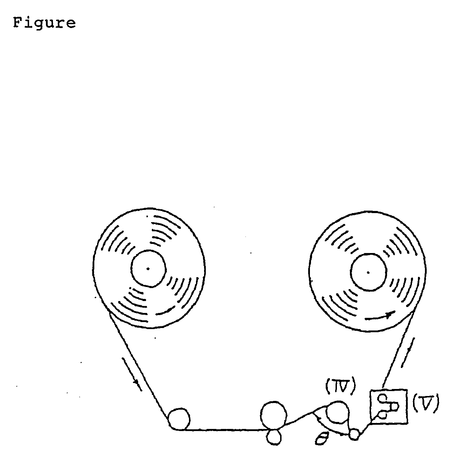

An apparatus of Fig. 2 is used.

A film of 10 mm in width is run in a length of 200 m at a running speed of 11.4 m/min. under a tension of 300 g, which is adjusted by detecting a tension with a tension pick-up (V) at an angle $\theta$ of 125°. Then, an amount of white powder adhered to a fixed pin (IV) (a diameter of 6 mm, SUS 420-J2 made, a finished surface of 0.2 S) is evaluated with naked eyes and ranked according to the following criteria:

A: No adhesion of white powder.

B: A very small amount of white powder, and a film is practically acceptable.

C: A fair amount of white powder, and a film may cause troubles after a long time use.

D: A large amount of white powder, and a film cannot be practically used.

(5) Characteristics of a video tape

A video tape is produced as follows:

Magnetic fine powder (200 parts), a polyurethane resin (30 parts), nitrocellulose (10 parts), a vinyl chloride/vinyl acetate copolymer (10 parts), lecitin (10 parts), cyclohexanone (100 parts), methyl isobutyl ketone (100 parts) and methyl ethyl ketone (300 parts) are mixed and dispersed in a ball mill for 48 hours, followed by the addition of a polyisocyanate compound (5 parts) to obtain a magnetic paint.

The magnetic paint is coated on a polyester film to a dry thickness of 2.5 $\mu$m, magnetically orientated before it is sufficiently dried, and then dried. The coated film is subjected to super calendering and slit at a width of 1/2 inch to obtain a video tape.

The characteristics of the video tape are evaluated using a NV-3700 video deck (manufactured by Matsushita Electric Industrial Co., Ltd.) at a normal speed.

VTR head output:

A VTR head output at a measuring frequency of 4 MHz is measured using a synchroscope. The measured value is expressed as a relative value (dB) to a value of a standard tape (0 dB).

Number of dropouts:

The video tape on which signals of 4.4 MHz is recorded is reproduced and the number of dropouts is counted at 15 $\mu$sec.-20 dB for about 20 minutes, and converted to the number of dropouts per one minute.

Tape runnability:

A running condition in the video deck is observed with naked eyes and evaluated.

Example 1

In a reactor, dimethyl terephthalate (100 parts), ethylene glycol (60 parts), magnesium acetate tetrahydrate (0.09 part) were charged and heated while removing methanol to effect transesterification, in which a temperature of the mixture was raised up to 230°C in 4 hours from the start of reaction to substantially complete the transesterification.

A slurry of vaterite calcium carbonate which was surface treated with a polymeric polycarboxylic acid and had an average particle size of 0.24 $\mu$m and a particle size distribution value of 1.29 (VAN-S020 manufactured by Maruo Calcium Co., Ltd.) (1.5 parts) in ethylene glycol was added to the above reaction mixture. Further, acid ethyl phosphate (0.04 part) and antimony trioxide (0.04 part) were added and a polycondensation reaction was carried out for 4 hours to obtain polyethylene terephthalate $A_1$.

The polyethylene terephthalate $A_1$ had an intrinsic viscosity of 0.65. The observation of the film internal part with a microscope confirmed that the particles were uniformly dispersed.

In the same manner as above but using no calcium carbonate particle, polyethylene terephthalate $B_1$ containing no particle and having an intrinsic viscosity of 0.66 was prepared.

The polyethylene terephthalate $A_1$ and $B_1$ were dried separately and melt extruded from respective extruders and extrudates were combined and laminated with a feed block. The film was cooled and solidified on a cooling roll kept at a surface temperature of 40°C with applying the electrostatic pinning to obtain an unoriented laminated film.

The laminated film was stretched in a machine direction at a draw ratio of 3.7 and then stretched with a tenter in a transverse direction at a draw ratio of 3.6 at 100°C. Further, the oriented film was restretched in the machine direction at a draw ratio of 1.13 and heat set at 220°C to obtain a biaxially oriented laminated film.

Examples 2-4 and Comparative Examples 1-6

In the same manner as in Example 1, a polyester containing the particles was prepared and a biaxially oriented polyester film having the properties of Table 1 was produced. A total thickness of the film and a thickness of layer A were adjusted by changing through-put from the extruders.

In Comparative Examples 1 and 2, the vaterite calcium carbonate was added to the polyester for the layer A by blending dried calcium carbonate particles with the polyethylene terephthalate $B_1$ in a twin-screw extruder.

Comparative Example 7

The polyethylene terephthalate $A_1$ (20 parts) and polyethylene terephthalate $B_1$ (80 parts), which were prepared in Example 1, were mixed, and a single layer film was produced under the same conditions as in Example 1.

The properties of the films obtained in Examples and Comparative Examples, and characteristics of the video tapes comprising the films as a base film are shown in Table 2.

The films of Examples 1-4 according to the present invention had excellent video tape characteristics since they had minute uniform protrusions on the surface. None of the films of Comparative Examples could provide the video tape having good characteristics.

8

<u>Table 1</u>

| Exam-ple No. | Particles in Layer A | | | | Particles in Layer B | | |
|---|---|---|---|---|---|---|---|
| | Kind | Particle size (μm) | Particle size distribution value | Con-tent (%) | Kind | Particle size (μm) | Con-tent (%) |
| 1 | Vaterite $CaCO_3$ | 0.24 | 1.29 | 1.5 | --- | --- | --- |
| 2 | ↑ | 0.30 | 1.25 | 2.0 | --- | --- | --- |
| 3 | ↑ | 0.24 | 1.29 | 1.5 | Silica | 0.12 | 0.15 |
| 4 | ↑ | 0.24 | 1.29 | 1.5 | Vaterite $CaCO_3$ | 0.17 | 0.10 |
| Com. 1 | ↑ | 0.30 | 1.25 | 25 | --- | --- | --- |
| Com. 2 | ↑ | 0.30 | 1.25 | 5.0 | --- | --- | --- |
| Com. 3 | Spherical silica | 0.27 | 1.20 | 3.0 | --- | --- | --- |
| Com. 4 | Calcite $CaCO_3$ | 0.25 | 1.70 | 2.0 | --- | --- | --- |
| Com. 5 | Vaterite $CaCO_3$ | 0.24 | 1.29 | 1.5 | Silica | 1.2 | 0.3 |
| Com. 6 | ↑ | 0.30 | 1.25 | 0.1 | --- | --- | --- |
| Com. 7 | ↑ | 0.24 | 1.29 | 0.3 | (Single Layer Film with No Layer B) | | |

EP 0 562 486 A1

Table 2

| Exam-ple No. | Film properties | | | | | | Video tape characteristics | | |
|---|---|---|---|---|---|---|---|---|---|
| | Thickness (μm) | | Surface roughness of Layer A | | | Abra-sion resis-tance | S/N (dB) | No. of dropouts per minute | Tape run-nability |
| | Layer A | Whole | Ra (μm) | Rt (μm) | Rt/Ra | | | | |
| 1 | 1 | 7 | 0.012 | 0.11 | 9.2 | A | +1.2 | 0.2 | Good |
| 2 | 1 | 7 | 0.018 | 0.16 | 8.9 | A | +1.1 | 0.4 | Good |
| 3 | 2 | 7 | 0.014 | 0.13 | 9.3 | A | +1.0 | 0.5 | Good |
| 4 | 3 | 10 | 0.014 | 0.12 | 8.6 | A | +1.0 | 0.2 | Good |
| Com. 1 | 0.5 | 7 | 0.055 | 0.72 | 13 | D | +0.5 | 5 | Good |
| Com. 2 | 0.1 | 7 | 0.015 | 0.21 | 14 | D | +0.8 | 4 | Good |
| Com. 3 | 1 | 7 | 0.050 | 0.54 | 11 | C | +0.2 | 9 | Good |
| Com. 4 | 1 | 9 | 0.022 | 0.27 | 12 | B | +0.2 | 13 | Fair |
| Com. 5 | 2 | 7 | 0.028 | 0.33 | 12 | A | -1.7 | 15 | Good |
| Com. 6 | 1 | 7 | 0.008 | 0.10 | 13 | B | -1.0 | 1 | Bad |
| Com. 7 | 7 | 7 | 0.009 | 0.10 | 11 | A | +0.1 | 4 | Fair |

**Claims**

1. A laminated polyester film comprising a layer (layer B) consisting a polyester containing particles having an average particle size of 0.5 μm or smaller in an amount of 0.5 % by weight or less based on the weight of polyester in the layer B, and at least one layer (layer A) which is formed on at least one surface of the layer B and consists of a polyester containing vaterite calcium carbonate particles having an average particle size of 0.07 to 1.0 μm and a particle size distribution value of 1.60 or smaller

10

defined by the following equation:

Particle Size Distribution value = $d_{25}/d_{75}$

where $d_{25}$ and $d_{75}$ represent particle sizes ($\mu$m) corresponding to 25 % and 75 %, respectively of the whole volume when an integrated volume of the particles is measured from the largest particles, in an amount of 0.2 to 20 % by weight based on the weight of the polyester in the layer A, wherein a thickness of the layer A is from 0.1 to 5 $\mu$m and 0.5 to 20 times an average particle size of vaterite calcium carbonate.

2. The laminated polyester film according to claim 1, wherein the particle size distribution value is 1.50 or less.

3. The laminated polyester film according to claim 1, wherein the average particle size of vaterite calcium carbonnate particles is from 0.1 to 0.8 $\mu$m.

4. The laminated polyester film according to claim 1, wherein the content of vaterite calcium carbonate particles in the layer A is from 0.2 to 10 % by weight.

5. The laminated polyester film according to claim 1, wherein the thickness of layer A is from 0.5 to 4.0 $\mu$m.

6. The laminated polyester film according to claim 1, wherein the thickness of layer A is 1 to 20 times the average particle size of vaterite calcium carbonate particles.

7. The laminated polyester film according to claim 1, wherein the layer has a center line average surface roughness (Ra) of 0.005 to 0.040 $\mu$m.

8. The laminated polyester film according to claim 1, wherein the largest height of protrusions on the layer A is from 0.05 to 0.3 $\mu$m.

9. The laminated polyester film according to claim 1, wherein the layer B contains no particles.

10. The laminated polyester film according to claim 1, wherein the layer B contains 0.5 % or less of particles based on the weight of polyester of the layer B.

11. The laminated polyester film according to claim 1, wherein a ratio of the thickness of layer A to that of layer B is from 1/99 to 50/50.

12. The laminated polyester film according to claim 1, which has a Young's modulus of at least 450 kg/mm$^2$ in a transverse direction of the film, and a sum of Young's moduli in machine and transverse directions of at least 850 kg/mm$^2$.

Figure

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 460 640 (DIAFOIL CO. LTD.)<br><br>* claim 1 *<br>* example 1; table 1 * | 1,3,4,7, 9,10 | B32B27/20<br>B32B27/36<br>C08J5/18 |
| Y | EP-A-0 158 960 (HOECHST A.G.)<br><br>* page 5, line 23 - page 7, line 15 * | 1,3,4,7, 9,10 | |
| A | EP-A-0 347 646 (TORAY INDUSTRIES, INC.)<br><br>* page 3, line 1 - line 31 *<br>* page 3, line 53 *<br>* page 3, line 56 - page 4, line 2 *<br>* page 4, line 29 - line 40 * | 1,3,4,6, 9,10 | |
| P,A | EP-A-0 502 745 (TORAY INDUSTRIES, INC.)<br><br>----- | | |

TECHNICAL FIELDS
SEARCHED (Int. Cl.5)

B32B
C08J

The present search report has been drawn up for all claims

| Place of search | Date of completion of the search | Examiner |
|---|---|---|
| THE HAGUE | 26 MAY 1993 | MCCONNELL C.H. |

EPO FORM 1503 03.82 (P0401)